# NEUE EUROPÄISCHE PATENTSCHRIFT

(11) **EP 0 812 273 B2**
(45) Veröffentlichungstag und Bekanntmachung des Hinweises auf die Entscheidung über den Einspruch: **14.09.2005**
(45) Hinweis auf die Patenterteilung: 12.05.1999
(21) Anmeldenummer: 96901241.8
(22) Anmeldetag: 09.02.1996
(51) Int. Cl.: B60K 35/00

(54) **VERFAHREN ZUR ANZEIGE VON MEHREREN INFORMATIONEN**
METHOD OF DISPLAYING SEVERAL ITEMS OF INFORMATION
DISPOSITIF D'AFFICHAGE D'INFORMATIONS MULTIPLES

(30) Priorität: 07.03.1995 DE 19507997
(43) Veröffentlichungstag der Anmeldung: 17.12.1997
(73) Patentinhaber: Moto Meter GmbH, D-71229 Leonberg (DE)
(72) Erfinder: UNSELD, Eckard, D-72149 Neustetten (DE); MILKNER, Ralf, D-71263 Weil der Stadt (DE)
(74) Vertreter: Friedmann, Jürgen
(86) Internationale Anmeldenummer: PCT/DE1996/000200
(87) Internationale Veröffentlichungsnummer: WO 1996/027510

(56) Entgegenhaltungen:
- EP-A- 0 122 043
- DE-A- 2 736 465
- DE-A- 2 821 344
- DE-A- 3 317 595
- DE-A- 3 346 370
- FR-A- 2 667 026
- GB-A- 2 275 813
- US-A- 4 072 924
- VDO Informationssysteme, Technische Information, VDO, ohne Impressum
- Lastauto, Omnibus, November 1992
- Mannesmann Illustrierte, Februar 1993
- ATZ, Automobiltechnische Zeitung, November 1994
- Bayerische Motorenwerke AG, Bedienungsanleitung BMW 7er, 1987

## Beschreibung

### Stand der Technik

Die Erfindung geht aus von einem Verfahren zur Anzeige von mehreren Informationen. Aus der FR-A-266 70 26 ist ein Verfahren zur Anzeige mehrerer Informationen mit unterschiedlichen Anzeigeprioritäten bekannt. Bei diesem Verfahren wird eine Information mit hoher Anzeigepriorität als Symbol ab dem Zeitpunkt des Auftretens des entsprechenden Zustandes angezeigt.

Aus offenkundiger Vorbenutzung ist ein gattungsgemäßes Zentrales Display bekannt.

Aus dem Kraftfahrzeugbereich sind Anzeigeinstrumente bekannt, die elektronische Anzeigen beispielsweise in der Form von LCD-Anzeigen aufweisen. Diese Anzeigen sind universell einsetzbar und dienen zur Anzeige von Informationen über verschiedene fahrzeugspezifische Daten für den Fahrzeuglenker.

Wie bereits eingangs erwähnt, ist es bekannt beim Auftreten eines relevanten Fehlers im Fahrzeugzustand dem Fahrzeuglenker eine entsprechende Information auf dem Anzeigeinstrument dargeboten werden kann. Beispielsweise sind Anzeigen bekannt, bei denen beim Unterschreiten des Tankfüllstandes unter einen vorgegebenen Grenzwert eine Warnlampe auf dem Anzeigefeld aufleuchtet. Die Warnlampe wird erst wieder ausgeschaltet, wenn der Tankinhalt über den vorgegebenen Grenzwert nachgefüllt wurde.

### Vorteile der Erfindung

Das erfindungsgemäße Verfahren zur Anzeige von mehreren Informationen mit den Merkmalen des Hauptanspruchs hat demgegenüber den Vorteil, daß eine angezeigte Information auf dem Anzeigefeld in Abhängigkeit der Betätigung mindestens eines Eingabemittels veränderbar ist, wodurch die dargestellte Information zwar weiterhin angezeigt wird, aber in einer durch die Bedienperson wählbaren Form. Die Betätigung des Eingabemittels kann außerdem als Rückmeldung beispielsweise an ein Speichermittel dienen, daß die Bedienperson die entsprechende Information erhalten und gelesen hat.

Durch die in den abhängigen Ansprüchen aufgeführten Maßnahmen sind vorteilhafte Weiterbildungen und Verbesserungen des im Hauptanspruch angegebenen Verfahrens zur Anzeige von mehreren Informationen möglich.

Wenn das Symbol angezeigt wird, bis der bestimmte Zustand aufgehoben ist, so wird die Bedienperson stets daran erinnert, daß der bestimmte Zustand noch zu beachten ist.

Die Veränderung der Symbolgröße bringt den Vorteil mit sich, daß eine variable Anzeige der Informationen möglich ist.

Durch die Ausgestaltung des Symbols mit Schriftzeichen ist es insbesondere möglich, der Bedienperson Klartextinformationen zu liefern, die ein sofortiges Erkennen des zugehörigen Informationsinhalts ermöglicht.

Es gestaltet sich weiterhin vorteilhaft, wenn das Symbol zunächst mit einer hohen Symbolgröße und/oder mit einer Zustandsbeschreibung in Form von Schriftzeichen angezeigt wird und dieses Symbol erst bei entsprechender Auswahl durch die Bedienperson verkleinert und/oder dem Zustand angepaßt wird, da dadurch das erste Anzeigen des Symbols die volle Aufmerksamkeit der Bedienperson auf sich zieht und ein deutliches und gutes Erkennen der Information möglich ist und dann nach der Betätigung des Eingabemittels erst eine reduzierte Darstellung des Symbols erfolgt, da die Bedienperson den Inhalt der Information dann bereits zur Kenntnis genommen hat. Dadurch wird außerdem das Anzeigefeld nach der Anzeige einer wichtigen Information, d.h. einer Information mit einer hohen Anzeigepriorität, insbesondere wieder für die Anzeige anderer Informationen mit niedrigerer Anzeigepriorität nutzbar.

Ersetzt man das Symbol durch wenigstens ein anderes Symbol, welches die Anzahl der vorhandenen Informationen mit hoher Anzeigepriorität darstellt, so lassen sich mehrere Informationen mit hoher Anzeigepriorität nach der erstmaligen Anzeige das andere Symbol umwandeln, wobei die Bedienperson eine Information darüber erhält, wieviele Informationen zu bestimmten Zuständen angezeigt werden.

Wird das Symbol durch Betätigung des wenigstens einen Eingabemittels wieder in unveränderter Form angezeigt, so wird es der Bedienperson auf einfache Weise ermöglicht, die Information erneut in ausführlicher Darstellungsform auf den Bildschirm zu rufen.

Die Änderung der Darstellungsformen der anderen Informationen mit niedrigerer Anzeigepriorität stellt insofern eine vorteilhafte Maßnahme dar, als es dadurch möglich ist, parallel zur Information mit hoher Anzeigepriorität auch andere Informationen darzustellen. Insbesondere ist es möglich, die Informationen mit niedrigerer Anzeigepriorität verkleinert darzustellen, wenn die Symbolgröße des Symbols für die Information mit hoher Anzeigepriorität groß ist und umgekehrt die Informationen mit niedrigerer Anzeigepriorität größer darzustellen, wenn das Symbol für die Information mit hoher Anzeigepriorität verkleinert wurde.

Durch Anbietung eines Auswahlmenüs wird der Bedienperson die Auswahl überlassen, auf welche Art das Symbol geändert werden soll. Dadurch entsteht der Vorteil der Flexibilität des Anzeigeverfahrens.

Werden die Anzeigen der anderen Informationen mit niedrigerer Anzeigepriorität beim Auftreten des Zustandes verändert, vorzugsweise verkleinert oder wenigstens zeitweise nicht angezeigt, so läßt sich das Symbol für die Anzeige der Informationen mit hoher Anzeigepriorität besonders groß und dadurch besonders auffällig und informativ gestalten. Dadurch steigert sich die Bedienerfreundlichkeit des Anzeigeverfahrens.

### Zeichnungen

Ein Ausführungsbeispiel der Erfindung ist in der Zeichnung dargestellt und in der nachfolgenden Beschreibung näher erläutert.

Es zeigen:
Figur 1a ein Anzeigefeld mit einem Auswahlmenü und einem Symbol,
Figur 1b ein Anzeigefeld mit einem anderen Symbol,
Figur 2 ein Ablaufschema für das Anzeigeverfahren.

### Beschreibung der Ausführungsbeispiele

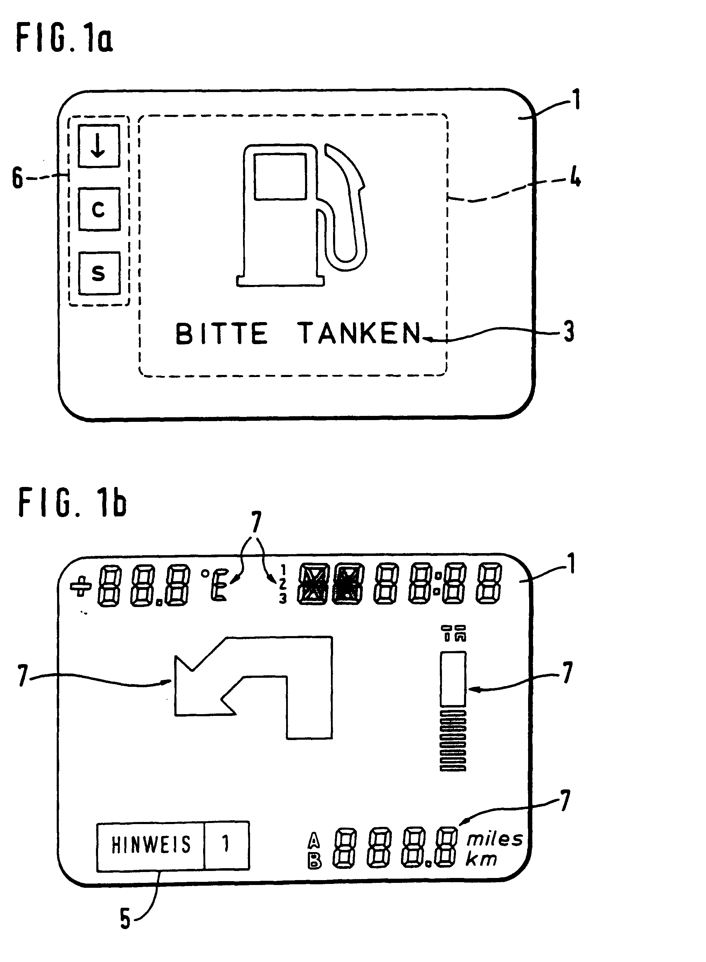

In Figur 1a ist ein Anzeigefeld 1 dargestellt, auf dem ein Symbol 4 und ein Auswahlmenü 6 dargestellt ist. Das Symbol 4 weist eine relativ große Symbolgröße auf und besteht aus einer bildhaften Darstellung einer Zapfsäule sowie aus Schriftzeichen. Die Schriftzeichen geben im Klartext zusammen mit der bildhaften Darstellung eine Information mit hoher Anzeigepriorität 3 wieder. Das Auswahlmenü 6 umfaßt drei Einzelfelder, bei denen ein Feld erfindungsgemäß zur Verkleinerung des Symbols 4, ein weiteres Feld c zu einer nicht erfindungsgemäßen Umwandlung des Symbols 4 in einen Zähler und ein drittes Feld s zu einer nicht erfindungsgemäßen Reduktion des Symbols 4 auf die ausschließliche, bildhafte Darstellung der Zapfsäule anwählbar ist.

Mittels in der Figur nicht dargestellten Eingabemitteln ist es einer Bedienperson möglich, eines der drei Felder des Auswahlmenüs 6 anzuwählen. Je nach Betätigung der Eingabemittel wird daraufhin das Symbol 4 verändert. So ist es erfindungsgemäß vorgesehen, das Symbol 4 aufgrund der Auswahl eines Verkleinerungsmodus in verkleinerter Form auf dem Anzeigefeld 1 darzustellen. In einer nicht zur Erfindung gehörenden Ausfühurungsform ist es vorgesehen, das Symbol 4 im angezeigten Informationsgehalt zu reduzieren, in dem die Klartextanzeige vom Anzeigefeld 1 gelöscht wird. In einer nicht zur Erfindung gehörenden Variante ist in der Figur 1b dargestellt, nämlich die Auswahl der Umwandlung in einen Zähler, die anhand der Figur 1b näher erläutert werden wird.

In der Figur 1b ist auf dem Anzeigefeld 1 ein anderes Symbol 5 sowie mehrere Informationen mit niedrigerer Anzeigepriorität 7 dargestellt. Durch Auswahl des Feldes c mit der Zählerfunktion im Auswahlmenü 6 aus Figur 1a wurde das Symbol 4 vom Anzeigefeld 1 gelöscht und durch das andere Symbol 5 ersetzt. Das andere Symbol 5 ist in Form eines Zählers gestaltet, welcher einen Klartextteil und einen Ziffernteil enthält, wobei mit jeder mittels Anwahl des Feldes c des Auswahlmenüs 6 eingegebenen Löschung des Symbols 4 vom Anzeigefeld 1 der Zählerstand inkrementiert wird. Dadurch, daß das Symbol 4 vom Anzeigefeld 1 gelöscht und durch das andere Symbol 5 ersetzt wurde, steht der übrige Flächenbereich des Anzeigefeldes 1 für die Informationen mit niedrigerer Anzeigepriorität 7 zur Verfügung. Beispielhaft sind in der Figur 1b als solche Informationen mit niedrigerer Anzeigepriorität 7 Darstellungen für digitale Zähler für Wegstrecke, Uhrzeit, etc. sowie eine Balkenanzeige und ein Wegrichtungsanzeiger dargestellt.

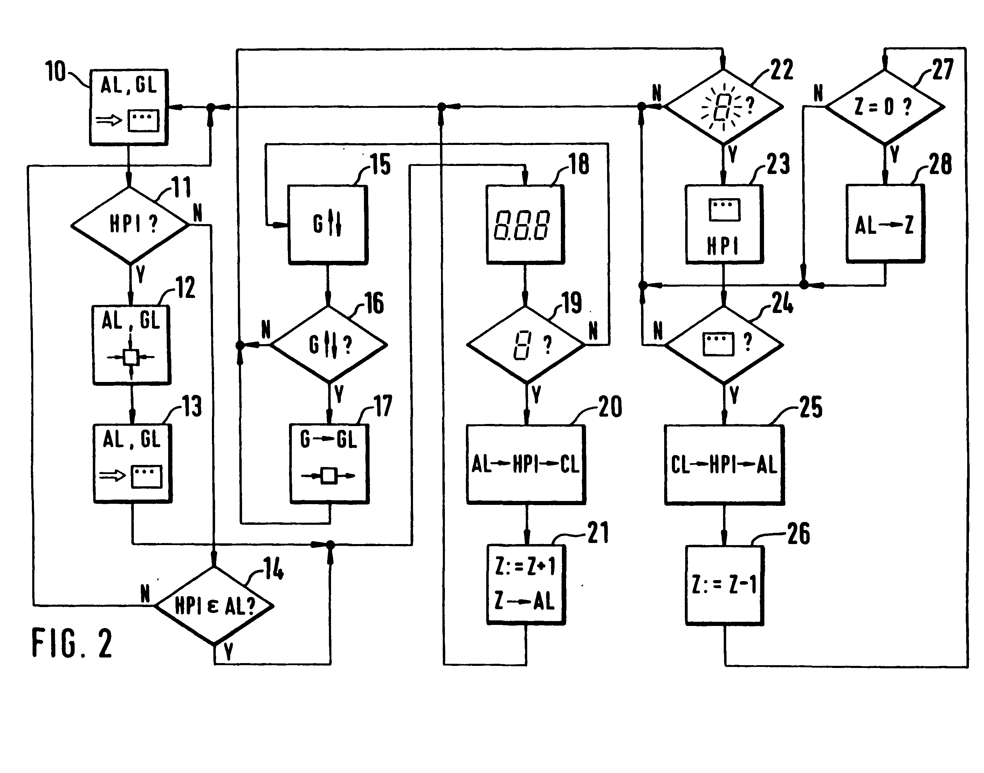

Der Ablauf des Verfahrens zur Anzeige mehrerer Informationen mit unterschiedlichen Anzeigeprioritäten soll nun anhand des Ablaufschemas in Figur 2 näher erläutert werden.

Das Verfahren beginnt mit einer Darstellung mehrerer Informationen anhand einer Auswahlliste (AL) und einer Größenliste (GL). Dies ist mit dem Feld 10 dargestellt, das den Verfahrensanfang markiert. Die Auswahlliste enthält die Reihenfolge sämtlicher anzuzeigender Informationen nach ihrer Priorität, d.h. Wichtigkeit für die Bedienperson. Entsprechend der begrenzten Größe der Anzeigefläche 1 werden üblicherweise nicht alle anzeigbaren Informationen angezeigt, sondern nur die eine bestimmte Mindestpriorität überschreitenden Informationen. In der Größenliste ist andererseits abgelegt, in welcher Größe die Informationen jeweils auf dem Anzeigefeld 1 darzustellen sind. Das Verfahren gelangt dann zur einer Abfrage 11, ob eine Information mit einer hohen Priorität 3 vorliegt (HPI?). Das Erkennen des Vorliegens kann beispielesweise durch eine Rundumabfrage von Sensoren erfolgen, die eine Messung von Zuständen vornehmen und bei Auftreten eines bestimmten Zustandes eine zugehörige Information mit hoher Priorität 3 an ein das Verfahren durchführendes Steuergerät o.ä. übermitteln. Im Falle eines Vorliegens einer solchen Information mit hoher Priorität 3 erfolgt ein Eintragen 12 dieser Information in die Auswahlliste und in die Größenliste. Dabei wird dieser Information mit hoher Priorität 3 zunächst eine hohe Größe zugeordnet, damit die Bedienperson deutlich die Information erkennen kann und ausreichend informiert wird. Dazu werden im Gegenzug die Größen der anderen darzustellenden Informationen mit niedrigerer Anzeigepriorität 7 in der Größenliste vermindert. Dies dient dazu, die anderen Informationen mit niedrigerer Anzeigepriorität 7 zwar noch anzuzeigen, aber der Wichtigkeit der neu angezeigten Information mit hoher Priorität 3 Rechnung zu tragen und sie größenmäßig gegenüber den anderen Informationen mit niedrigerer Anzeigepriorität 7 hervorzuheben. Nach dieser Änderung der Auswahlliste und der Größenliste erfolgt erneut ein Anzeigen 13 sämtlicher anzuzeigender Informationen anhand der Auswahlliste und Größenliste.

Anschließend wird der Bedienperson beispielsweise per Auswahlmenü analog zur Figur 1a die Möglichkeit geboten, durch Betätigung eines Eingabeelements den Zähler zu aktivieren 18. Bei einer darauffolgenden Abfrage 19 wird festgestellt, ob das entsprechende Eingabemittel zur Aktivierung des Zählers betätigt wurde. In dem Fall, wenn die Aktivierung des Zählers gewünscht wurde, wird im folgenden Schritt 20 die Information mit hoher Priorität 3 aus der Auswahlliste gelöscht und in eine Zählerliste CL eingeschrieben (AL → HPI → CL). Außerdem wird in einem nächsten Schritt 21 eine Zählervariable Z inkrementiert und der Zähler selbst in die Auswahlliste eingetragen (Z:=Z+1, Z → AL). Danach verzweigt das Verfahren wieder zum Ausgangspunkt 10, d.h. es erfolgt ein Darstellen der Informationen anhand der Auswahlliste und der Größenliste.

Wurde bei der Anfrage 11, ob eine Information mit hoher Priorität 3 aufgetreten ist (HPI?), keine solche Information festgestellt, so verzweigt der Verfahrensablauf zu einer weiteren Anfrage 14, ob sich wenigstens eine Information mit hoher Priorität 3 in der Auswahlliste befindet (HPI ∈ AL?), d.h. ob gerade eine Information mit hoher Priorität 3 angezeigt wird. Ist dies der Fall, so verzweigt der Ablauf wieder zur Anbietung 18 der Möglichkeit, den Zähler zu aktivieren. Ist dagegen keine Information mit hoher Priorität 3 in der Auswahlliste, so wird auch keine Information mit hoher Priorität 3 angezeigt, und es muß auch kein zugehöriger Zähler angeboten werden. Daher verzweigt der Ablauf in diesem Falle wieder zurück an dessen Anfang 10.

Wurde von der Bedienperson bei der Abfrage 19, ob ein Zähler dargestellt werden soll, eingegeben, daß kein Zähler gewünscht ist, so wird im nächsten Schritt 15 der Bedienperson die Möglichkeit geboten, per Betätigung eines Eingabemittels die Größe der Darstellungsform der Information mit hoher Priorität 3 zu ändern (G ↑↓). Bei der nachfolgenden Abfrage 16 wird festgestellt, ob eine solche Größenänderung von der Bedienperson ausgewählt wurde (G ↑↓?). Wurde die Größe durch die Bedienperson geändert, so wird in einem Folgeschritt 17 die eingegebene Größe in die Größenliste eingetragen (G → GL) und gleichzeitig die restlichen Größen der weiteren anzuzeigenden Informationen mit niedrigerer Anzeigepriorität 7 in umgekehrtem Maß verändert. Als per Auswahlmenü anbietbare Größenänderung kann der Bedienperson insbesonders angeboten werden, mit einem Tastendruck die Information mit hoher Priorität 3 wieder in der unveränderten Darstellungsform oder mit einer maximalen oder auch minimalen Größe und/oder Informationsgehalt anzuzeigen. Es kann aber auch eine stufenlose oder schrittweise Veränderung auswählbar sein.

Danach wird ebenso wie in dem Fall, wenn keine Größenänderung eingegeben wurde, abgefragt, ob der Zähler aktiviert ist; dies ist der Schritt 22. Ist der Zähler ausgeschaltet, so kehrt das Programm zu dem Verfahrensablaufsanfang 10 zurück. Ist der Zähler dagegen aktiviert, so wird nun der Bedienperson in einem Angebot 23 die Möglichkeit geboten, die durch den Zähler ersetzten und ansonsten ausgeblendeten Informationen mit hoher Priorität 3 erneut in unveränderter Form, d.h. in der Form, die bei der erstmaligen Anzeige der Information mit hoher Priorität 3 vorlag, anzuzeigen. Nach der folgenden Abfrage 24, ob eine solche Anzeige ausgewählt wurde, wird im positiven Beantwortungsfall in einem Verfahrensschritt 25 die entsprechende Information mit hoher Priorität aus der Zählerliste gelöscht und in die Auswahlliste geschrieben (CL → HPI → AL). Zusätzlich folgt ein Dekrementieren 26 des Zählerstands (Z:=Z-1). Nach dem Dekrementieren 26 des Zählerstands folgt eine Anfrage 27, ob der Zählerstand auf Null abgesunken ist (Z=0?). Ist der Zählerstand gleich Null, so wird in einem anschließenden Vorgang 28 der Zähler aus der Auswahlliste gelöscht (AL → Z). Ist der Zählerstand noch nicht gleich Null, so verbleibt der Zähler dagegen in der Auswahlliste. Anschließend kehrt das Verfahren zu seinem Anfang 10 zurück. Dies ist ebenfalls der Fall, wenn keine Anzeige einer ausgeblendeten Information mit hoher Priorität 3 ausgewählt wurde, oder auch wenn kein Zähler aktiviert ist.

In der Zeichnung nicht dargestellt ist die Anfrage, ob ein die Information mit hoher Priorität 3 auslösender Zustand bereits wieder behoben ist. Dies ist am einfachsten dadurch realisierbar, daß die Information mit hoher Priorität 3 bei der zugehörigen Anfrage 11 (HPI?) von einem den Zustand meldenden Sensor nicht mehr als vorhanden deklariert wird. Dann erfolgt auch im Verlauf des Ablaufschemas eine Löschung der Informationen mit hoher Priorität 3, die zu dem mittlerweile behobenen Zustand angezeigt wurde.

Durch dieses Verfahren ist es also möglich, Informationen mit hoher Priorität 3 so lange auf dem Anzeigefeld 1 darzustellen, bis eine Aufhebung des die Anzeige der Information mit hoher Priorität 3 begründenden Zustands vorliegt. So lange hat jedoch die Bedienperson die Möglichkeit, durch Betätigung von Eingabemitteln, beispielsweise in Form von Drucktasten, die Darstellungsart der permanent auf dem Anzeigefeld 1 dargestellten Information mit hoher Priorität 3 zu wählen. Insbesondere ist es dabei möglich, zunächst eine solche Information bei Auftreten eines solchen Zustandes mit einem großen Symbol mit einer Klartextinformation darzustellen, und nach der Betätigung des Eingabemittels durch die Bedienperson die Information in Form eines verkleinerten Symbols insbesondere an den Rand des Anzeigefeldes 1 darzustellen. Dadurch ist die Information mit hoher Anzeigepriorität 3 einerseits ständig auf dem Anzeigefeld 1 dargestellt, und es ist dennoch möglich, weitere Informationen mit niedrigerer Anzeigepriorität 7 auf dem Anzeigefeld 1 darzustellen. Dies ist insbesondere dann vorteilhaft, wenn eine sofortige Aufhebung des Zustandes, der die Anzeige der Information mit hoher Priorität 3 nicht möglich oder auch nicht erwünscht ist. Die Betätigung der Eingabemittel kann zudem gleichzeitig zur Feststellung der Tatsache dienen, ob die Bedienperson die entsprechende Information auf dem Anzeigefeld 1 gelesen hat. Wird daher die Betätigung des Eingabemittels zur Quittierung der angezeigten Information mit hoher Anzeigepriorität 3 beispielsweise in einem Speichermittel abgespeichert, so ist es bei einem späteren Auslesen aus dem Speichermittel möglich, festzustellen, welche Informationen die Bedienperson gegebenenfalls auch zu welchem Zeitpunkt gelesen hat und welche nicht. Als Veränderungen, die die Bedienperson auswählen kann, sind beispielsweise auch Textänderungen vorsehbar. Es sind auch mehrere Zähler als andere Symbole 5 einsetzbar, die eine nach bestimmten Priotäten, Informationsgruppen oder anderen Kriterien getrennte Zählung der ausgeblendeten Informationen mit hoher Priorität 3 vornehmen.

Das Verfahren ist vorzugsweise für Anzeigeinstrumente in Fahrzeugen einsetzbar. Bei einem Abspeichern in einem Speichermittel, wie z.B. einem Fahrzeugdaten-Unfallschreiber ist es daher auch möglich, Gewährleistungsansprüche oder Haftungsbegrenzungen aufgrund der abgespeicherten Daten zu ermitteln. Es ist üblicherweise erwünscht, daß Informationen mit hoher Anzeigepriorität 3 unmittelbar dann angezeigt werden, wenn ein entsprechender Zustand im zugehörigen Fahrzeug aufgetreten ist. Solche Zustände können Ausfälle wichtiger Bauteile oder Über- bzw. Unterschreitungen von fahrzeugspezifischen Parametern über- bzw. unter einen vorgegebenen Grenzwert sein. Es können aber auch zeitlich gesteuerte Anzeigen erfolgen.

Erfindungsgemäß ist vorgesehen, daß eine automatische Verkleinerung der Information mit hoher Priorität 3 nach Ablauf einer gewissen Zeitspanne erfolgt, um dem Fahrer wieder eine Übersicht über mehrere Informationen gleichzeitig zu bieten. Auch kann die Information mit hoher Priorität 3 periodisch abwechselnd mit anderen Informationen wechselnd angezeigt werden, bis eine Veränderung von der Bedienperson eingegeben wird.

Es ist nicht zwingend, daß eine Information mit hoher Priorität 3 bis zur Aufhebung des bestimmten Zustandes angezeigt wird. Es kann auch nützlich sein, manche Informationen nach einer entsprechenden Auswahl durch die Bedienperson ganz von der Anzeige zu löschen. Bei der erstmaligen Anzeige der Information mit hoher Priorität 3 ist es vorteilhaft, die ganze Anzeigefläche zu nutzen und daher die anderen, zuvor angezeigten Informationen nicht mehr anzuzeigen. Dennoch können diese durch die Information mit hoher Priorität 3 überdeckten Informationen über eine Veränderungsauswahl durch die Bedienperson wieder sichtbar gemacht werden.

## Patentansprüche

1. Verfahren zur Anzeige von mehreren Informationen mit unterschiedlichen Anzeigeprioritäten auf einem Anzeigefeld (1) wobei eine Information mit hoher Anzeigepriorität (3), vorzugsweise eine Warninformation, in Form wenigstens eines Symbols (4) ab dem Zeitpunkt des Auftretens eines bestimmten Zustandes auf dem Anzeigefeld (1) angezeigt wird, **dadurch gekennzeichnet, dass** dieses Symbol (4) in Abhängigkeit von wenigstens einer Betätigung wenigstens eines Eingabemittels durch eine Bedienperson in seiner Symbolgröße verkleinerangezeigt wird und dass nach Ablauf einer gewissen Zeitspanne die Information mit hoher Anzeigepriorität automatisch verkleinert angezeigt wird.

2. Verfahren zur Anzeige von mehreren Informationen nach Anspruch 1, **dadurch gekennzeichnet, daß** das Symbol (4) in Abhängigkeit von wenigstens einer weiteren Betätigung des wenigstens einen Eingabemittels durch die Bedienperson wieder in unveränderter Form angezeigt wird.

3. Verfahren zur Anzeige von mehreren Informationen nach einem der Ansprüche 1 bis 2, **dadurch gekennzeichnet, daß** zusätzlich zur Verkleinerung des Symbols (4) die Darstellungsformen der anderen Informationen mit niedrigerer Anzeigepriorität (7) verändert werden.

4. Verfahren zur Anzeige von mehreren Informationen nach einem der Ansprüche 1 bis 3, **dadurch gekennzeichnet, daß** durch Anzeige eines entsprechenden Auswahlmenüs (6) der Bedienperson eine Auswahl der Änderung des Symbols (4) angeboten wird.

5. Verfahren zur Anzeige von mehreren Informationen nach einem der Ansprüche 1 bis 4, **dadurch gekennzeichnet, daß** die Anzeigen der anderen Informationen mit niedrigerer Anzeigepriorität (7) auf dem Anzeigefeld (1) beim Auftreten des bestimmten Zustandes verändert, vorzugsweise verkleinert oder wenigstens zeitweise nicht angezeigt, werden.

## Claims

1. Method for displaying a plurality of information items having different display priorities on a display panel (1), an information item having a high display priority (3), preferably a warning information item, being displayed on the display panel (1) in the form of at least one symbol (4) from the time when a specific state occurs, **characterized in that** this symbol (4) is displayed on a reduced symbol scale as a function of at least one operation of at least one input means by an operator, and **in that** the information with a high display priority is displayed automatically on reduced scale once a certain time interval has elapsed.

2. Method for displaying a plurality of information items according to Claim 1, **characterized in that** the symbol (4) is displayed in unchanged form again, as a function of at least one further operation of the at least one input means by the operator.

3. Method for displaying a plurality of information items according to one of Claims 1 and 2, **characterized in that**, in addition to reducing the symbol (4), the display forms of the other information items with lower display priority (7) are changed.

4. Method for displaying a plurality of information items according to one of Claims 1 to 3, **characterized in that**, by displaying an appropriate selection menu (6), the operator is offered a selection to change the symbol (4).

5. Method for displaying a plurality of information items according to one of Claims 1 to 4, **characterized in that** the display of the other information items having lower display priority (7) on the display panel (1) changes when the specific state occurs, preferably being reduced in size or, at least at times, not being displayed.

## Revendications

1. Procédé d'affichage de plusieurs informations ayant des priorités d'affichage différentes sur un champ d'affichage (1), une information à priorité d'affichage élevée (3) notamment d'alarme étant affichée sur le champ d'affichage (1) sous la forme d'au moins un symbole (4) à partir d'un instant où se produit un certain état,
**caractérisé en ce qu'**
en fonction d'au moins un actionnement d'au moins un moyen d'entrée par un utilisateur, ce symbole (4) est réduit dans sa taille de symbole, et après un certain temps on affiche automatiquement en réduction l'information de priorité d'affichage élevée.

2. Procédé d'affichage de plusieurs informations selon la revendication 1,
**caractérisé en ce qu'**
en fonction d'au moins un autre actionnement d'au moins un moyen d'entrée par l'utilisateur, on affiche de nouveau le symbole (4) sous une forme inchangée.

3. Procédé d'affichage de plusieurs informations selon l'une des revendications 1 ou 2,
**caractérisé en ce qu'**
en plus de la réduction du symbole (4), on modifie les formes de représentation des autres informations ayant une priorité d'affichage (7) plus faible.

4. Procédé d'affichage de plusieurs informations selon l'une des revendications 1 à 3,
**caractérisé en ce que**
par l'affichage d'un menu de sélection (6) correspondant, on indique à l'utilisateur une sélection de modification du symbole (4).

5. Procédé d'affichage de plusieurs informations selon l'une des revendications 1 à 4,
**caractérisé en ce qu'**
on modifie les affichages des autres informations à priorité d'affichage plus faible (7) sur le champ d'affichage (1) lorsque se produit l'état déterminé, cette modification consistant de préférence à diminuer la taille ou au moins à supprimer périodiquement l'affichage.
